# EUROPEAN PATENT APPLICATION

(11) **EP 3 639 671 A1**
(43) Date of publication of application: **22.04.2020**
(21) Application number: 19203586.3
(22) Date of filing: 16.10.2019
(51) Int. Cl.: A23C 3/033, A23C 9/13

(54) **PRODUCTION OF YOGHURT MILK AND YOGHURT**

(30) Priority: 17.10.2018 EP 18201010
(71) Applicant: Tetra Laval Holdings & Finance S.A., 1009 Pully (CH)
(72) Inventor: Lindgren, Katarina, 22733 Lund (SE); Björklund, Dan, 224 67 Lund (SE); Loserius, Anna, 23731 Bjärredf (SE); Cronström, Carin, 263 32 Höganäs (SE)
(74) Representative: Tetra Pak - Patent Attorneys SE

(57) **Abstract**

Production of yoghurt milk and yoghurt is described. Raw milk is preheated (201) and the preheated raw milk is separated (205) into skim milk and cream. A dry matter component is provided (207) and mixed (209) with the skim milk and at least part of the cream into yoghurt milk. The yoghurt milk is then pasteurized (217) and cooled (219). Yoghurt is produced by providing a yoghurt culture to the yoghurt milk and, after incubation, yoghurt is obtained.

## Description

### TECHNICAL FIELD

Embodiments herein relate to methods for producing yoghurt milk and yoghurt from raw milk.

### BACKGROUND

Industrial production of yoghurt in a so-called yoghurt line comprises a number of steps of processing raw milk into yoghurt milk, and thereafter processing the yoghurt milk into yoghurt. Such a process includes two pasteurization steps with an intermediate mixing step where powders (solids) are added. The first pasteurization step is typical milk pasteurization at e.g. 72 °C for 20 seconds. Cream separation, standardization and homogenization are also performed. The pasteurized milk is then formulated by powder addition in the mixing step, which is typically done in batches. Skim milk powder, sugar and often various stabilizers such as starch and pectin are examples of components that may be added to the pasteurized milk in the mixing step. Thereafter, the mixed product is homogenized and subjected to a second pasteurization at e.g. 90-95 °C for about 300 seconds to form yoghurt milk. The yoghurt milk is transferred to fermentation tanks where yoghurt culture is added to ferment the yoghurt milk into yoghurt.

A drawback with such prior art yoghurt milk and yoghurt production is that it is non-optimal in terms of cost of investment in equipment as well as operational cost.

### SUMMARY

In view of the above, an object of the present disclosure is to overcome or at least mitigate at least some of the drawbacks related to prior art production of yoghurt milk and yoghurt.

This object is achieved in a first aspect by a method of producing yoghurt milk from raw milk. The method comprises preheating the raw milk and separating the preheated raw milk into skim milk and cream. A dry matter component is provided and mixed with the skim milk and at least part of the cream into yoghurt milk. The yoghurt milk is then pasteurized and cooled.

This method may be a continuous process where the dry matter component (powders) is continuously provided and mixed into the milk. Moreover, the prior art's use of two pasteurization steps is replaced by a single pasteurization step that takes place subsequent to the mixing step. An advantage of such effects is an increase in efficiency of the yoghurt milk production process and thus also the yoghurt production process. By removing the prior art initial pasteurization step and exchanging the prior art batch mixing step with a continuous mixing step, thereby removing the need for heat exchanger capacity and batch equipment capacity, a lower investment cost and a substantial decrease of the operational cost is obtained.

Further emphasizing the advantages, in various embodiments, in the preheating step, the temperature of the raw milk may be increased to a preheat temperature (Tₚₕ) that is at least 10 °C lower than a temperature (Tₜₕₚ) at which the yoghurt milk, is pasteurized.

In various embodiments, subsequent to mixing the skim milk, at least part of the cream and the dry matter component into yoghurt milk and prior to pasteurizing the yoghurt milk, the method may comprise preheating the yoghurt milk and deaerating the preheated yoghurt milk.

Such embodiments ensure minimum air content in the yoghurt milk, which enables an improved subsequent fermentation time in the yoghurt production steps, as well as enabling an improved stability and viscosity of the yoghurt.

In a second aspect there is provided a method of producing yoghurt that comprises introducing a yoghurt culture into yoghurt milk that has been produced from raw milk according to the first aspect. The yoghurt milk in which the yoghurt culture was introduced is incubated, such that yoghurt is formed, and the yoghurt is packed into packages.

This further aspect provides effects and advantages corresponding to the effects and advantages as summarized above in connection with the first aspect. All features and variants described herein in connection with the method according to the first aspect may be used for the method according to the second aspect, and vice versa.

### BRIEF DESCRIPTION OF THE DRAWINGS

Embodiments will now be described, by way of example, with reference to the accompanying schematic drawings, in which:
figures 1a-c are schematic illustrations of a system for producing yoghurt milk and yoghurt,
figure 2 is a flowchart of a method of producing yoghurt milk, and
figure 3 is a flowchart of a method of producing yoghurt.

### DETAILED DESCRIPTION

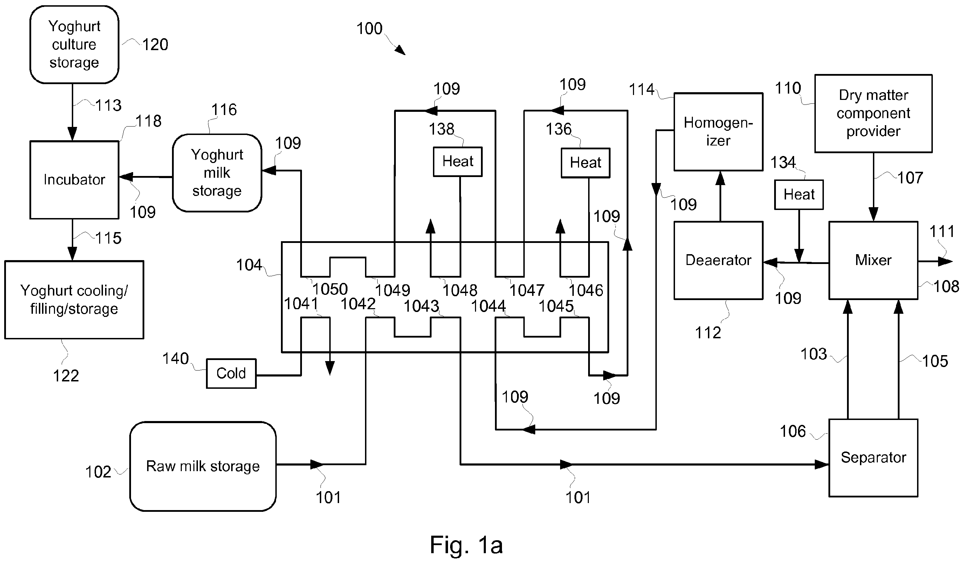

With reference to **figure 1a**, an embodiment of a system 100 for producing yoghurt milk 109 and yoghurt 115 from raw milk 101 comprises a number of components. Needless to say, only the major components of the system 100 are illustrated for the sake of clarity. As the skilled person will realize, the system 100 typically comprises a number of pumps and valves in and between the various components in order to enable the processing of the raw milk 101 into yoghurt milk 109 and yoghurt 115, as will be described below.

A raw milk storage unit 102 is configured to provide the raw milk 101, e.g. raw whole milk, to a preheating circuit 1042, 1043 in a heat exchanger 104. Heat is provided to the heat exchanger 104 in heat circuits 1046, 1048 from a heat providing unit 136 and a heat providing unit 138, respectively.

A separator 106 is arranged to receive the preheated raw milk 101 and to separate the preheated raw milk 101 into skim milk 103 and cream 105. Optionally, the preheated milk is deaerated in a deaerator (not shown) prior to being introduced into the separator 106.

A mixer unit 108 is arranged to receive the skim milk 103, the cream 105 and a dry matter component 107 from a dry matter component source 110.

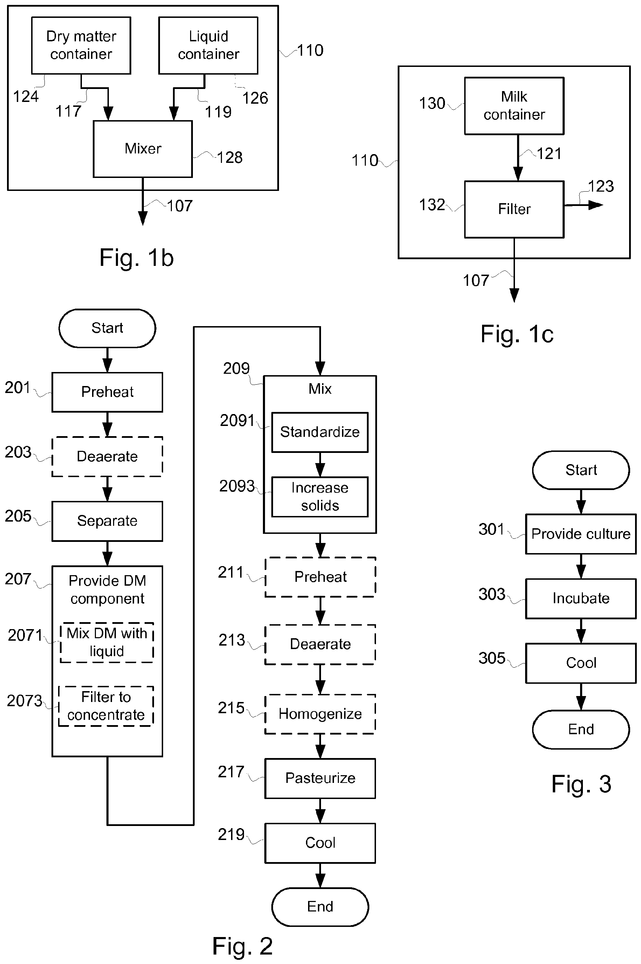

The dry matter component source 110 may have the form of, as illustrated in **figure 1b**, a container 124 that holds dry matter, and a container 126 that holds liquid. A mixer unit 128 is configured to receive dry matter 117 and liquid 119 provided from the dry matter container 124 and the liquid container 126, respectively, and configured to mix the dry matter 117 and the liquid 119 into the dry matter component 107. The dry matter 117 may, e.g., be a protein powder and the liquid 119 may, e.g., be water or pasteurized milk the dry matter component 107 may then have to form of a sludge or a liquid that has a high content of solids.

Alternatively, as illustrated in **figure 1c**, the dry matter component source 110 may comprise a container 130 for holding milk, and a filter unit 132. The filter unit 132 is arranged to receive milk 121, e.g. in the form of raw whole milk or in the form of processed milk, as provided from the milk container 130. The filter unit 132 is arranged to filtrate, e.g. by ultra-filtration, the milk 121 in to a permeate 123 and a retentate. This filtration may be done in one or more steps. The retentate has a high content of solids and forms the dry matter component 107. The permeate 123 may be handled as desired; however, any such handling is outside the scope of the present disclosure.

Returning to figure 1a, the mixer unit 108 is further configured to mix the skim milk 103 and at least part of the cream 105 together with the dry matter component 107 into yoghurt milk 109. The mixing is performed so that the desired fat content (standardization) and solid content are obtained. Surplus cream 111 from the mixer unit 108 may be handled as desired.

A heat providing unit 134, e.g. in the form of a heat exchanger, is configured to provide heat to the yoghurt milk 109. It is to be noted that the amount of heat provided by the heat providing unit 134 to the yoghurt milk 109 is significantly less than an amount of heat that would raise the temperature of the yoghurt milk 109 to a pasteurizing temperature. The heat providing unit 134 may be realized (although not illustrated) in the form of a further pre-heating circuit within the heat exchanger 104.

A deaerator unit 112 is configured to receive the yoghurt milk 109 and configured to minimize the air content of the yoghurt milk 109. This enables improved fermentation time, stability and viscosity of yoghurt produced from the yoghurt milk 109.

A homogenizer unit 114 is arranged to receive the yoghurt milk 109 from the deaerator unit 112 and to homogenize the yoghurt milk 109. From the homogenizer 114 the yoghurt milk 109 is transferred to the heat exchanger 104.

The heat exchanger 104 has a plurality of heating circuits 1044, 1045 where heat is transferred to the yoghurt milk 109 to perform pasteurization of the yoghurt milk 109. As exemplified in figure 1a, heat providing units 136, 138 are configured to provide heat to the heat exchanger 104, typically in form of hot water or steam.

The heat exchanger 104 is further configured with a plurality of cooling circuits 1047, 1049, 1050 where heat is transferred from the yoghurt milk 109, which accomplishes cooling of the pasteurized yoghurt milk 109.

A cold providing unit 140 is arranged to feed a cold media, such as ice water, into the heat exchanger 104 to absorb heat from the cooling circuit 1050 via a heat absorbing circuit 1041.

A yoghurt milk storage unit 116 is arranged to receive cooled yoghurt milk 109 from the heat exchanger 104.

An incubator 118 is arranged to receive yoghurt milk 109 from the yoghurt milk storage unit 116. A yoghurt culture storage unit 120 is arranged to inject a yoghurt culture 113 into the yoghurt milk 109. The incubator 118 is further configured to properly mix the yoghurt culture 113 with the yoghurt milk, and to allow the yoghurt milk 109 to ferment until it forms yoghurt 115.

A yoghurt cooling and/or filling and/or storage system 122 is arranged to receive the yoghurt 115 from the incubator 118 and to handle the yoghurt 115 as desired, e.g. by packaging the yoghurt into individual, packaged units and storing packets of yoghurt. Cooling means that the temperature is actively decreased to inhibit the growth of microorganisms.

Turning now to **figure 2**, and with continued reference to figures 1a-c, a method of producing yoghurt milk 109 from raw milk 101 will be described in some more detail.

The method commences with preheating 201 the raw milk 101. As exemplified in figure 1a, the raw milk may originate from the raw milk storage unit 102 and the preheating may take place in one or more preheating circuit 1042, 1043 in the heat exchanger 104. Preheating means that the temperature is increased to 55-80 °C, which is the temperature that is normally applied for homogenizing milk.

It is to be noted that the preheating 201 step is not a pasteurizing step. For example, during the preheating 201, the temperature of the raw milk 101 may be increased to a preheat temperature Tₚₕ that is at least 10 °C lower than a temperature Tₜₕₚ at which the yoghurt milk 109, is pasteurized in the pasteurizing step 217 that will follow as described below.

The preheated raw milk 101 is separated 205 into skim milk 103 and cream 105 in the separator 106.

In some embodiments, the preheated raw milk 101 may be deaerated 203 subsequent to the preheating 201 and prior to the separating 205.

A dry matter component 107 is provided 207 together with the skim milk 103 and at least part of the cream 105 to a mixing step 209. The mixing step 209 can be divided into a standardization step 2091 that obtains a desired fat content of the yoghurt milk, and a step 2093 of increasing the solid content that obtains a desired content of solids such as sugars and proteins in the yoghurt milk 109.

The dry matter component 107 may comprise any of a slurry, a milk concentrate or powders, all of which comprises at least 80%, or even at least 300% more solids than the raw milk 101.

For example, in some embodiments, the providing 207 of the dry matter component 107 may comprise mixing 2071 dry matter 117 with a liquid 119 into a slurry 107. The mixing 207 may then comprise mixing the slurry 107 with the skim milk 103 and the cream 105.

For example, in some embodiments, the providing 207 of the dry matter component 107 may comprise filtering 2073 milk 121 into a permeate 123 and a milk concentrate 107. The mixing 207 may then comprise mixing the milk concentrate 107 with the skim milk 103 and the cream 105.

In some embodiments, the yoghurt milk 109 is preheated 211 and deaerated 213 subsequent to the mixing 209 and prior to being pasteurized 217. By performing deaeration of the yoghurt milk 109, i.e. subsequent to the mixing 209, it can be ensured that the air content of the yoghurt milk 109 is minimized, which will improve fermentation when the yoghurt milk 109 is used in a yoghurt production method. Stability and viscosity of yoghurt may also be improved if deaeration 213 is performed subsequent to the mixing 209.

In some embodiments, the yoghurt milk 109 is homogenized 215 subsequent to the deaerating 213 and prior to being pasteurized.

The yoghurt milk 109 is pasteurized 217, e.g. in one or more heating circuits 1044, 1045 in the heat exchanger 104. It is to be noted that, preferably, the pasteurization 217 is the only step of pasteurization that takes place in the method of producing the yoghurt milk 109. Parameters that define the pasteurization 217, such as the specific temperature of the yoghurt milk 109 and the duration of which the yoghurt milk 109 is subject to the specific temperature, meet all relevant legal requirements regarding reduction of undesired microorganisms. For example, pasteurization is obtained by subjecting the yoghurt milk 109 to a temperature in the interval 72 °C to 75 °C for a period of 15 to 20 seconds. Only one step of pasteurization 217 is performed. The preheating 201 is done with the purpose of providing efficient homogenization and is not considered as being a step of pasteurization. For the method, only one step of preheating and only one step of homogenization is performed.

The pasteurized yoghurt milk 109 is then cooled 219, e.g. in one or more cooling circuits 1047, 1049, 1050 in the heat exchanger 104.

Turning now to **figure 3**, and with continued reference to figures 1a-c and figure 2, a method of producing yoghurt 113 will be described in some more detail.

The method commences with providing 301 a yoghurt culture 113 into cooled pasteurized homogenized yoghurt milk 109 that has been produced as exemplified above.

The cooled pasteurized homogenized yoghurt milk 109 that has been provided with the yoghurt culture 113 is then incubated 303 during a predetermined time period during which the yoghurt 115 is formed.

The yoghurt 113 is then cooled 305, which may take place prior to or subsequent to an optional step of filling the yoghurt 113 into individual packages.

## Claims

1. A method of producing yoghurt milk (109) from raw milk (101), the method comprising:
- preheating (201) the raw milk (101),
- separating (205) the preheated raw milk (101) into skim milk (103) and cream (105),
- providing (207) a dry matter component,
- mixing (209) the skim milk (103), at least part of the cream (105) and the dry matter component (107) to form yoghurt milk (109),
- pasteurizing (217) the yoghurt milk (109), and
- cooling (219) the pasteurized yoghurt milk (109).

2. The method of claim 1, wherein, in the preheating (201) step, the temperature of the raw milk (101) is increased to a preheat temperature (Tₚₕ) that is at least 10 °C lower than a temperature (Tₜₕₚ) at which the yoghurt milk (109), is pasteurized (215).

3. The method of claim 1 or claim 2, wherein:
- providing (207) the dry matter component (107) comprises mixing (2071) dry matter (117) with a liquid (119) into a slurry (107), and
- the mixing (207) comprises mixing the slurry (107) with the skim milk (103) and the cream (105).

4. The method of any preceding claim, wherein:
- providing (207) the dry matter component (107) comprises filtering (2073) milk (121) into a permeate (123) and a milk concentrate (107), and
- the mixing (207) comprises mixing the milk concentrate (107) with the skim milk (103) and the cream (105).

5. The method of any of the preceding claims, wherein the dry matter component (107) comprises any of a slurry, a milk concentrate or powders that has at least 80% more solids than the raw milk (101).

6. The method of any of the preceding claims, wherein the yoghurt milk (109) is produced by using only one step of pasteurization (217).

7. The method of any of the preceding claims, comprising, subsequent to preheating (201) the raw milk (101) and prior to separating (205) the raw milk (101):
- deaerating (203) the preheated raw milk (101).

8. The method of any of the preceding claims, comprising, subsequent to mixing (209) the skim milk (103), at least part of the cream (105) and the dry matter component (107) into yoghurt milk (109) and prior to pasteurizing (217) the yoghurt milk (109):
- preheating (211) the yoghurt milk (109),
- deaerating (213) the preheated yoghurt milk (109).

9. The method of any of the preceding claims, comprising, subsequent to deaerating (213) the preheated yoghurt milk (109) and prior to pasteurizing (217) the yoghurt milk (109):
- homogenizing (215) the yoghurt milk (109).

10. A method of producing yoghurt (113), comprising:
- introducing (301) a yoghurt culture (113) into yoghurt milk (109) that has been produced from raw milk (101) according to any of claims 1 to 9,
- incubating (303) the yoghurt milk (109) in which the yoghurt culture (113) was introduced, such that yoghurt (115) is formed, and
- packing the yoghurt (115) into packages.
